# EUROPEAN PATENT SPECIFICATION

(11) **EP 1 990 295 B1**
(45) Date of publication and mention of the grant of the patent: **27.03.2013**
(21) Application number: 07019241.4
(22) Date of filing: 01.10.2007
(51) Int. Cl.: B65G 57/16, B29C 51/44

(54) **Stacker apparatus for presses for manufacturing plastic articles such as cups and the like**
Stapelvorrichtung für Pressen zur Herstellung von Kunststoffartikeln, wie z. B. Becher
Appareil d'empileuse pour des presses de fabrication d'articles plastiques tels que des gobelets et similaires

(30) Priority: 16.04.2007 IT MI20070764
(43) Date of publication of application: 12.11.2008
(73) Proprietor: WM Wrapping Machinery SA, 6855 Stabio (CH)
(72) Inventor: Bianchini, Pierino, 20037 Paderno Dugnano (Milano) (IT); Belardi, Pierluigi, 20090 Rodano (Milano) (IT); Boffelli, Vittorio, 22056 Olgiate Molgora (Como) (IT)
(74) Representative: Forattini, Amelia

(56) References cited:
- US-A- 4 565 513
- US-A- 6 135 756
- US-B1- 6 558 150

## Description

The present invention relates to a stacker apparatus for presses for manufacturing plastic articles such as cups and the like.

In particular, the present invention relates to a stacker apparatus which can be applied to a machine provided with a movable lower mold nest, in which the articles are formed, and has at least two operating positions: a position for forming the articles and a position for expelling them.

In the expulsion position, the mold nest is tilted and directed toward the head of the stacker, which includes a plurality of stacking channels into which the molded articles are propelled.

A problem of such stacking system is that the head of the stacker must be arranged at a distance from the mold nest, in order to allow the mold nest to rotate from the vertical position to the stacking position without interfering with the stacker head.

Such distance is the cause of jamming of the articles, typically articles having an elongated shape such as plastic cups, which can be tilted by the expulsion air jet and therefore become trapped between the mold nest and the head of the stacker at the inlet of the stacking channels.

US4565513 discloses an apparatus for stacking articles of the above described type.

The aim of the present invention is to provide a stacker apparatus which overcomes the drawbacks of the cited prior art.

An object of the invention is to provide a stacker apparatus which makes it possible to substantially reduce the space between the mold nest and the inlet of the channels of the stacker during the expulsion of the articles.

A further object of the invention is to provide a device which makes the operation of the machine more reliable.

A further object is to provide a device which is capable of stacking the articles more rapidly and accurately.

This aim and these and other objects, which will become better apparent hereinafter, are achieved by a stacker apparatus, for presses for manufacturing plastic articles such as cups and the like, comprising a stacking head which faces a mold nest which has at least two positions, an upright position and a rotated position in which the upper surface of said mold nest faces said stacking head, characterized in that it comprises a guide means adapted to move said stacking head during the rotation of said mold nest so that said stacking head is at a reduced distance from said upper surface of said mold nest in at least said rotated position as compared to said upright position.

Further characteristics and advantages will become better apparent from the description of preferred but not exclusive embodiments of the invention, illustrated by way of non-limiting example in the accompanying drawings, wherein:

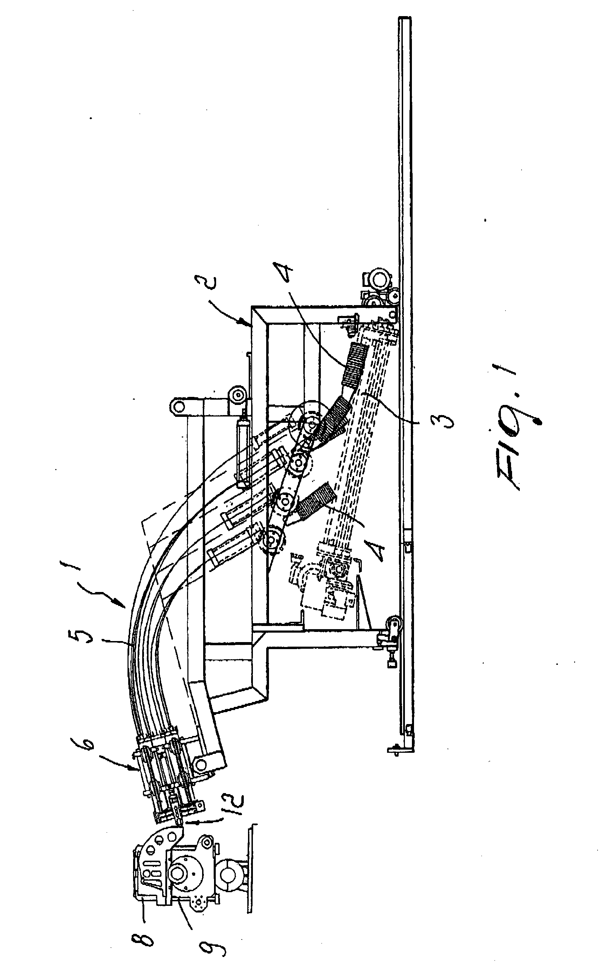

Figure 1 is a side view of the stacker apparatus according to the present invention;
Figure 2 is a side view, enlarged with respect to Figure 1, of the lower mold nest of the press and of the head of the stacker, shown in the article forming position;
Figure 3 is a view, similar to Figure 2, showing the initial step of the rotation of the mold nest;
Figure 4 is a view, similar to Figure 3, illustrating a subsequent step of the rotation of the mold nest;
Figure 5 is a view, similar to Figure 4, illustrating a final step of the rotation of the mold nest which is in the expulsion position;
Figure 6 is a view, similar to Figure 5, illustrating the return rotation of the mold nest.

With reference to the cited figures, a stacker apparatus according to the invention, generally designated by the reference numeral 1, comprises a movable carriage 2, which is provided with a surface 3 for collecting the molded articles, which in the specific case are constituted by plastic cups 4. The cups 4 arrive in a stacked condition on the surface 3 from a plurality of stacking ducts 5 which are associated with a head 6.

The head 6 of the stacker has a plurality of channels 7, one for each article to be stacked which arrives from a lower mold nest 8 of the press.

Each channel 7 is associated with a respective duct 6 at one end and with a plate 10 at the other end, the one directed toward the mold nest 8 of the press.

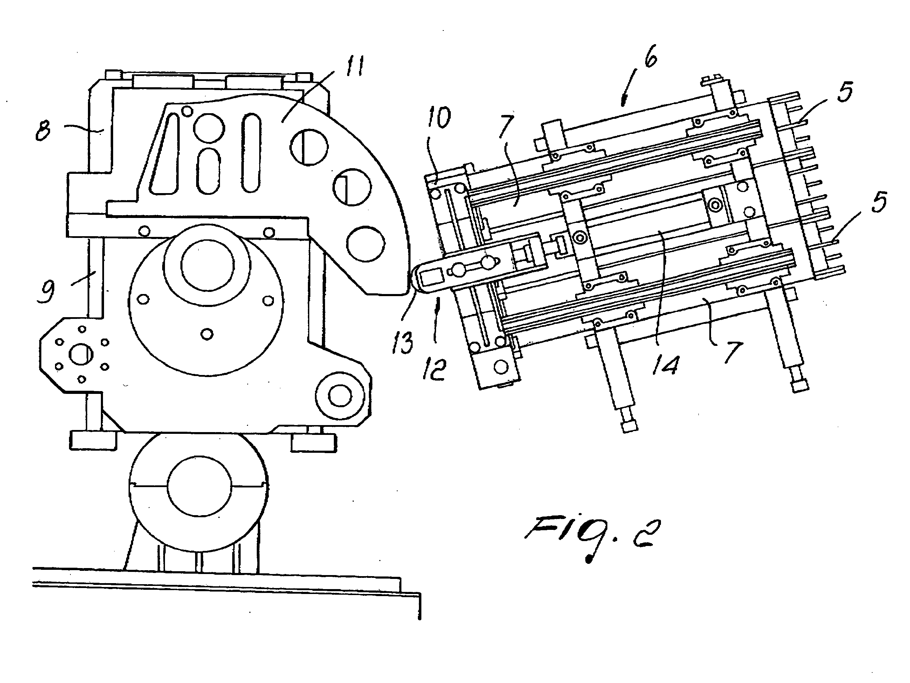

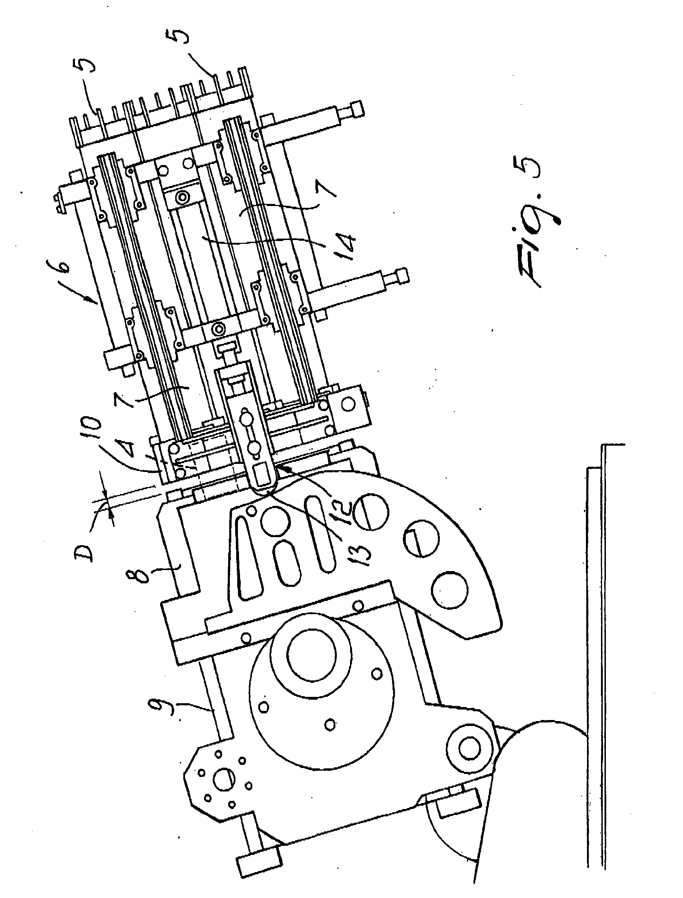

The lower mold nest 8 is supported by a movable surface 9, which turns the lower mold nest from an upright position, shown in Figure 2, to an inclined expulsion position, shown in Figure 5.

In the expulsion position, the plate 10 of the head 6 faces, and is substantially parallel to, the upper surface of the mold nest 8 so that a recess which contains an article formed in the mold nest 8 corresponds to each channel 7 of the head.

In this position, an air jet propels each formed article into the respective channel and thus into the stacking duct 5.

The movable surface 9, which supports the mold nest 8, has a cam element 11. A cam follower 12 acts on the cam element 11 and is associated with the plate 10 of the head 6 of the stacker.

The cam follower 12 has a roller 13, which is in contact with the cam 11 by means of a pneumatic cylinder 14.

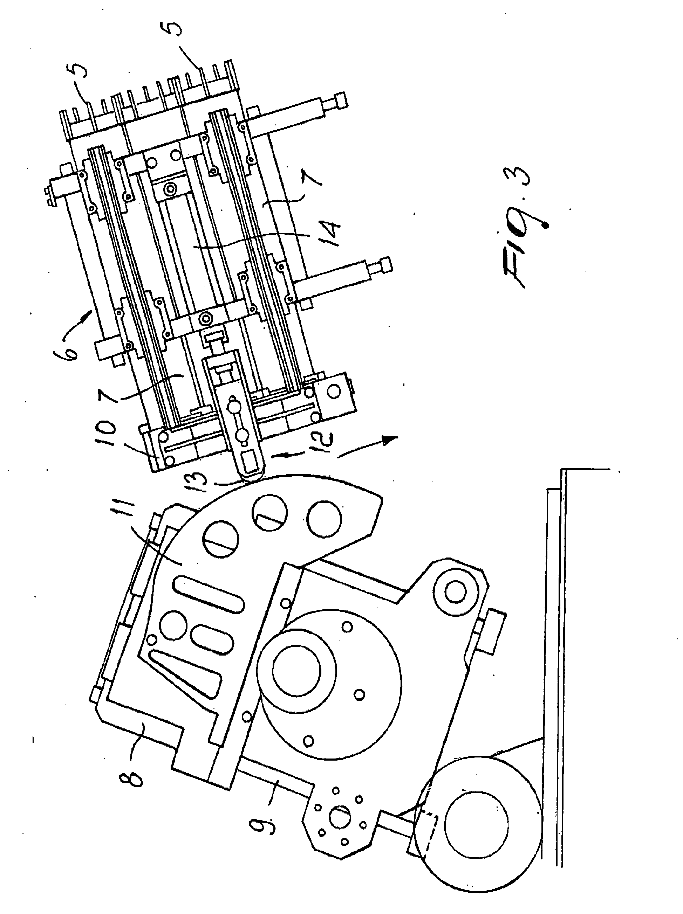

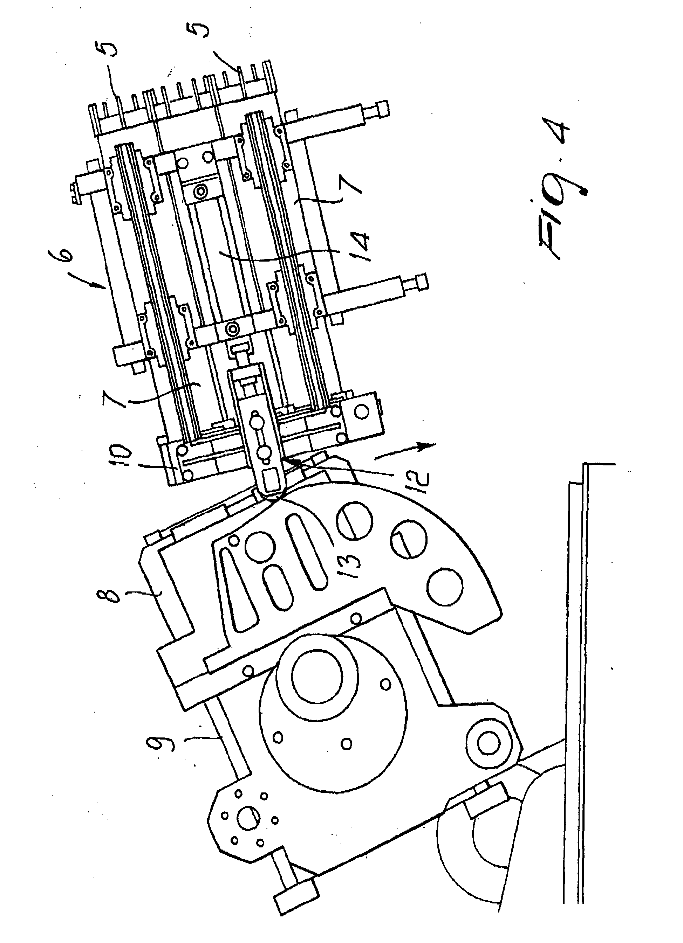

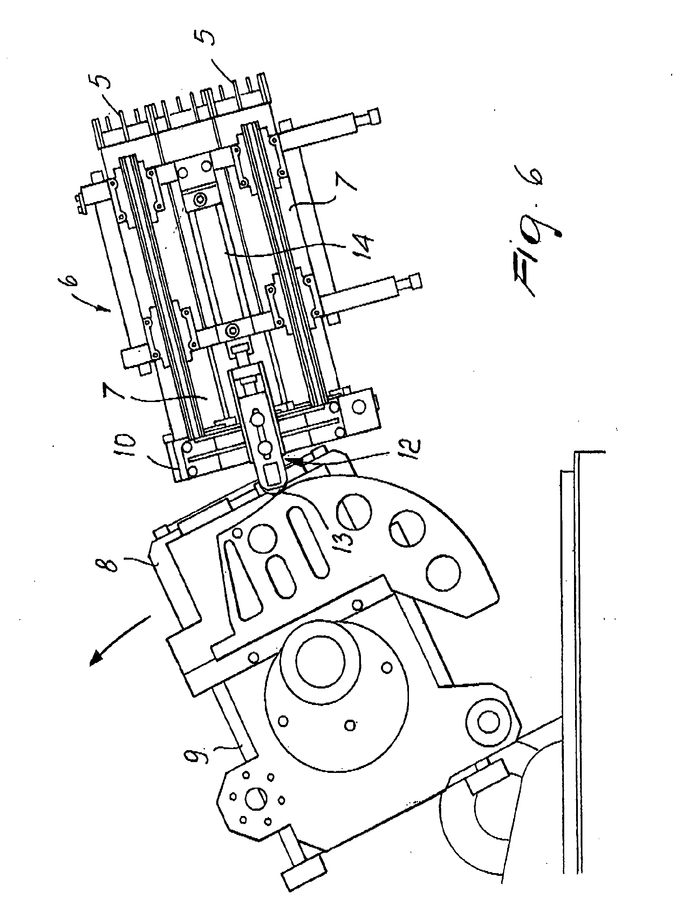

As is evident from the sequence shown in Figures 2-6, the system with a cam and cam follower allows the plate 10 of the head 6 to move toward the mold nest 8 when it rotates in order to assume the stacking position.

In other words, the profile of the cam 11 is such that the distance between the plate 10 and the mold nest 8 is large enough to allow the rotation of the mold nest without interfering with the stacker, but is reduced to a minimum in the position for expelling the formed articles.

In this expulsion position, shown in Figure 5, the distance D between the plate 10 and the upper surface of the mold nest 8 is extremely small and prevents an article from tilting during the passage from the recess of the mold nest to the channel 7 of the head 6.

Once expulsion of the formed articles is completed, the mold nest 8 turns in order to return to the upright position and the cam 11 moves the plate 10 away from the head 6 of the stacker, preventing interference between them.

In practice it has been found that the invention achieves the intended aim and objects, a stacker apparatus having been provided which prevents the jamming which is typical of the devices of the prior art.

By moving the inlet plate toward the mold nest, the expelled articles cannot tilt and enter without jamming the respective channels, to be sent to the stacking ducts of the device.

## Claims

1. A stacker apparatus, for presses for manufacturing plastic articles such as cups (4) and the like, comprising a stacking head (6) which faces a mold nest (8) which has at least two positions, an upright position and a rotated position in which the upper surface of said mold nest faces said stacking head, **characterized in that** it comprises a guide means (11, 12) adapted to move said stacking head during the rotation of said mold nest so that said stacking head is at a reduced distance from said upper surface of said mold nest in at least said rotated position as compared to said upright position.

2. The stacker apparatus according to claim 1, **characterized in that** said guide means comprises a cam (11) and a cam follower (12) assembly.

3. The stacker apparatus according to claim 1 or 2, **characterized in that** said guide means comprises a cam associated with said mold nest and a cam follower associated with said head.

4. The stacker apparatus according to one or more of the preceding claims, **characterized in that** said cam is associated with a movable surface (9) which supports said mold nest.

5. The stacker apparatus according to one or more of the preceding claims, **characterized in that** said stacking head comprises a plate (10) provided with one or more inlets of respective channels (7), each of which is associated with a stacking duct (5).

6. The stacker apparatus according to one or more of the preceding claims, **characterized in that** it comprises a pneumatic cylinder (14) adapted to ensure the contact of said cam follower with said cam, said cam follower being associated with said plate.

7. The stacker apparatus according to one or more of the preceding claims, **characterized in that** it comprises a movable carriage (2) which is provided with a surface (3) for collecting the molded articles, which arrive in a stacked condition on said surface from said stacking ducts associated with said head.

## Patentansprüche

1. Eine Stapelvorrichtung für Pressen zur Herstellung von Kunststoffartikeln, wie zum Beispiel Bechern (4) und dergleichen, die einen Stapelkopf (6) umfasst, der einem Formnest (8) gegenüberliegt, welcher mindestens zwei Positionen hat, eine aufrechte Position und eine gedrehte Position, in der die obere Oberfläche des Formnestes dem Stapelkopf gegenüberliegt, **dadurch gekennzeichnet, dass** sie ein Führungsmittel (11, 12) umfasst, ausgebildet, um den Stapelkopf während der Drehung des Formnestes zu bewegen, so dass der Stapelkopf zumindest in der gedrehten Position im Vergleich zu der aufrechten Position sich in einem reduzierten Abstand von der oberen Oberfläche des Formnestes befindet.

2. Die Stapelvorrichtung gemäß Anspruch 1, **dadurch gekennzeichnet, dass** das Führungsmittel einen Nocken (11) und einen Nockenstößelaufbau (12) umfasst.

3. Die Stapelvorrichtung gemäß Anspruch 1 oder 2, **dadurch gekennzeichnet, dass** das Führungsmittel einen Nocken, verbunden mit dem Formnest, und einen Nockenstößel, verbunden mit dem Kopf, umfasst.

4. Die Stapelvorrichtung gemäß einem oder mehreren der obigen Ansprüche, **dadurch gekennzeichnet, dass** der Nocken mit einer beweglichen Oberfläche (9) verbunden ist, die das Formnest trägt.

5. Die Stapelvorrichtung gemäß einem oder mehreren der obigen Ansprüche, **dadurch gekennzeichnet, dass** der Stapelkopf eine Platte (10), ausgestattet mit einem oder mehreren Eingängen entsprechender Kanäle (7), umfasst, von denen jeder mit einem Stapelgang (5) verbunden ist.

6. Die Stapelvorrichtung gemäß einem oder mehreren der obigen Ansprüche, **dadurch gekennzeichnet, dass** sie einen Druckluftzylinder (14) umfasst, ausgebildet, um den Kontakt des Nockenstößels mit dem Nocken sicherzustellen, wobei der Nockenstößel mit der Platte verbunden ist.

7. Die Stapelvorrichtung gemäß einem oder mehreren der obigen Ansprüche, **dadurch gekennzeichnet, dass** sie einen beweglichen Schlitten (2) umfasst, der mit einer Oberfläche (3) zum Sammeln der geformten Artikel ausgestattet ist, die auf der Oberfläche von den mit dem Kopf verbundenen Stapelgängen in einem gestapelten Zustand ankommen.

## Revendications

1. Dispositif d'empilage pour des presses destinées à fabriquer des articles en plastique, tels que des gobelets (4) et autres, comprenant une tête d'empilage (6) faisant face à une cavité de moulage (8) avec au moins deux positions, dont une position verticale et une position tournée, dans laquelle la surface supérieure de ladite cavité de moulage fait face à ladite tête d'empilage, **caractérisé en ce qu'**il comprend un moyen de guidage (11, 12) adapté pout déplacer ladite tête d'empilage pendant la rotation de ladite cavité de moulage, de manière à ce que ladite tête d'empilage se trouve à une distance réduite de ladite surface supérieure de ladite cavité de moulage, au moins dans ladite position tournée en comparaison avec ladite position verticale.

2. Dispositif d'empilage selon la revendication 1, **caractérisé en ce que** ledit moyen de guidage comprend une came (11) et un ensemble de suiveur de came (12).

3. Dispositif d'empilage selon la revendication 1 ou 2, **caractérisé en ce que** ledit moyen de guidage comprend une came associée avec ladite cavité de moulage et un suiveur de came associé à ladite tête.

4. Dispositif d'empilage selon l'une ou plusieurs des revendications précédentes, **caractérisé en ce que** ladite came est associée à une surface mobile (9) supportant ladite cavité de moulage.

5. Dispositif d'empilage selon l'une ou plusieurs des revendications précédentes, **caractérisé en ce que** ladite tête d'empilage comprend un plateau (10) pourvu d'une ou plusieurs entrées de canaux respectifs (7), parmi lesquels chacun est associé à un conduit d'empilage (5).

6. Dispositif d'empilage selon l'une ou plusieurs des revendications précédentes, **caractérisé en ce qu'**il comprend un cylindre pneumatique (14) adapté pour assurer le contact entre ledit suiveur de came et ladite came, ledit suiveur de came étant associé audit plateau.

7. Dispositif d'empilage selon l'une ou plusieurs des revendications précédentes, **caractérisé en ce qu'**il comprend un chariot mobile (2) pourvu d'une surface (3) destinée à collecter les articles moulés arrivant dans un état empilé sur ladite surface, à partir desdits conduits d'empilage associés à ladite tête.
